# EUROPEAN PATENT SPECIFICATION

(11) **EP 3 714 743 B1**
(45) Date of publication and mention of the grant of the patent: **13.10.2021**
(21) Application number: 20165831.7
(22) Date of filing: 26.03.2020
(51) Int. Cl.: A47J 31/38, A47J 31/36

(54) **ESPRESSO MACHINE WITH ELECTRIC ACTUATOR AND RETROFIT KIT**
ESPRESSOMASCHINE MIT ELEKTRISCHEM AKTUATOR UND NACHRÜSTSATZ
MACHINE EXPRESSO DOTÉE D'UN ACTIONNEUR ÉLECTRIQUE ET D'UN KIT DE RATTRAPAGE

(30) Priority: 28.03.2019 IT 201900004669
(43) Date of publication of application: 30.09.2020
(73) Proprietor: PICAF S.R.L., 85025 Melfi (PZ) (IT)
(72) Inventor: PIGNETTI, Vincenzo, 85025 Melfi (PZ) (IT)
(74) Representative: Giraldi, Elisa

(56) References cited:
- EP-A1- 2 572 611
- US-A1- 2016 287 007

## Description

### Field of the invention

The present invention generally relates to an espresso machine with an electric actuator. In particular, the present invention relates to the application of the electric actuator as a replacement for the manual lever systems in espresso machines. The present invention further relates to a retrofit kit for existing espresso machines.

### Background art

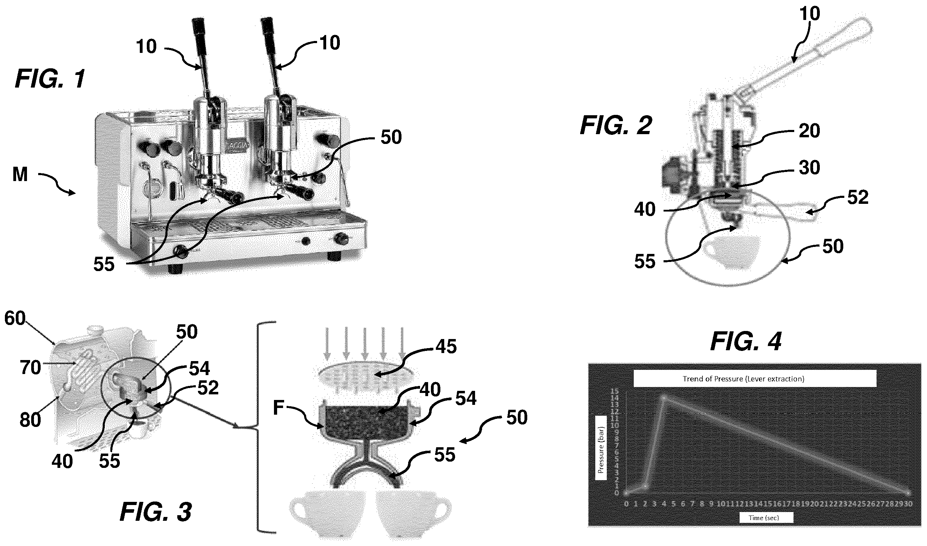

With reference to Figures 1, 2, and 3, the lever espresso machine M comprises at least one lever 10 for the spring loading, at least one spring 20, at least one piston 30 acting on a portion of ground coffee 40. An extraction unit 50 comprises a dispensing spout 55 distribute the prepared beverage.

The espresso machine M comprises a boiler 60 containing water for preparing coffee. When the lever 10 is activated to dispense the coffee, a "portion" of water is pre-washed by the boiler 60 and is heated by passing through a coil or resistor 70 located inside boiler 60 (the heat exchanger). After a few seconds of pre-brewing, an electric pump 80 forces the water to pass through a shower diffuser disc 45 and the ground coffee 40 contained in the filter holder 54, thus extracting the substances and aromas of the coffee in a very energetical manner and creating the desired hot beverage.

The operation of espresso machines usually available in bars or at home is very similar; in principle, only the size changes, and this element may partially influence the quality of the beverage obtained.

In particular, known espresso machines comprise the following elements:
- a boiler 60, generally made of steel, copper or brass; the purpose thereof is to heat and keep the water hot by means of a resistor 70 or heat exchanger, and to dispense the steam and hot water which is usually used to prepare hot beverages, such as, tea, herbal teas or infusions, and/or to froth milk to prepare cappuccino;
- an electric pump 80 is the tool capable of pressing the water against the coffee powder with a pressure of around nine atmospheres; a pressure gauge on the machine usually indicates the extraction pressure; and
- the extraction unit 50 comprises a shower diffuser disc 45 with a filter holder 54 equipped with a handle 52 to facilitate the operation of loading and removing the doses of ground coffee; in addition to the handle 52, it comprises a container for the filter holder 54 which accommodates the ground and pressed coffee 40; if the filter F is made of stainless steel, the filter holder 54 is often made of copper, so as to better keep the heat; the extraction unit comprises one or two dispensing spouts 55 for dispensing coffee positioned at the bottom of the container for the filter holder 54.

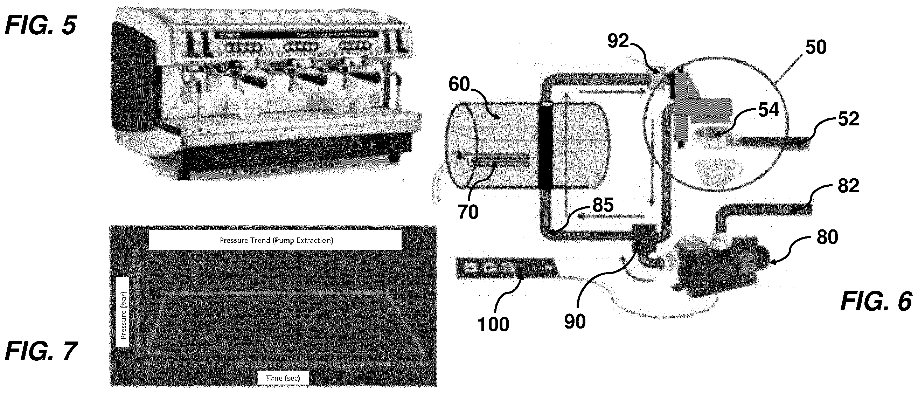

Figure 4 shows the trend of pressure over time during a lever machine extraction, while Figure 7 shows the trend of pressure over time during pump extraction.

The difference between a home espresso machine and a bar espresso machine mainly lies in the size. In fact, a smaller boiler will have more difficulty (with intense use) in keeping the water warm enough and a steam ideal for frothing milk. On the contrary, a "heavy" machine structure, therefore with a lot of metal, will instead allow to keep the pressure, and therefore the heat of the water, at best.

Currently the extraction of the espresso with the lever machine 10 starts when the operator loads the springs 20 of the piston 30 by pulling the lever 10 downwards. In this first step, the pre-brewing occurs, i.e., the water which arrives hot from the boiler 60 starts to wet the ground coffee 40 present in the filter holder 54, but is not capable of permeating it. When the lever 10 is released, the springs 20 start to push the piston 30, thus forcing the water to pass through the shower diffuser disc 45 and the ground coffee 40 present in the filter holder 54 below. Therefore, the coffee dispensing begins from the dispensing spouts 55. The high temperature of the water and the high thrust pressure of the piston and the descent speed thereof determine the quality of the infusion in the cup.

Automatic espresso machines which use a pump are also known from the prior art. In the Figures, corresponding parts of the machines have the same reference numeral.

Such automatic machines, see Figures 5 and 6, comprise a boiler 60 containing water and a heating resistor 70. The water enters by means of an inlet duct 82 which supplies a pump 80. The water, at the outlet of the pump 80, passes through a solenoid valve 90 by means of a duct 85 which leads it to the boiler 60. At the outlet of the boiler 60, the water, still in the duct 85, reaches a flow control valve 92 which supplies hot water to the extraction unit 50.

Document EP 2 572 611 A1 discloses an espresso machine.

### Summary of the invention

The present invention aims at automating the manual operation with which current lever coffee machines with piston are equipped. In particular, the lever which currently the operator energetically pulls downwards and then releases (action necessary to load the spring which will subsequently make the piston work) is replaced by an electric actuator.

With this invention, the operators (baristas) will no longer have to strain themselves to prepare the coffee, thus also saving time, since the operations of pulling the lever, waiting for the right pre-brewing time and releasing the lever will no longer be necessary, since they will be automatically performed by the electric actuator. The electric actuator does not act directly on the piston, but an anchoring structure is present which transmits the movement.

In particular, the present invention relates to an espresso machine comprising:
- an extraction unit adapted to extract the beverage from a portion of ground coffee contained in a filter holder,
- an infusion cylinder where one or more springs and a piston are accommodated, in which the piston acts on the portion of ground coffee contained in the filter holder,
- a boiler containing water for preparing coffee,
where the machine further comprises an actuator mounted onto the dispensing unit of the coffee machine by means of an anchoring system, in which the actuator indirectly acts on the piston by means of the anchoring system which is adapted to transmit the movement of the actuator to load the spring and push the piston which allows the water from the boiler to permeate the ground coffee and obtain the beverage.

The anchoring system comprises an upper wall connected to the actuator, side walls surrounding a movement transmission unit and a bottom wall in communication with the extraction unit.

A first tubular anchoring element is arranged between an end portion of the actuator and the movement transmission unit which is connected by means of a second tubular anchoring element to the piston.

The movement transmission unit comprises an upper bush connected to a lower bush by means of a joint. The upper bush is connected by means of the first tubular anchoring element to the actuator and the lower bush is connected by means of the second tubular anchoring element to the piston.

In particular, the spring travels in the gap between the bottom wall of the anchoring system and the piston.

In addition, a side wall of the cylinder has an opening for the water from the boiler to enter, in which the opening is closed by the piston in the rest condition of the piston or free but blocked by a solenoid valve.

According to the invention, the upper bush comprises a portion for anchoring the electric actuator, a slotted hole, and an inner hole for the sliding of the lower bush, and the lower bush comprises a hole and a portion for anchoring the piston.

In the assembled condition of the two bushes, a pin is provided, being inserted into the slotted hole, which allows the sliding of the two bushes into each other, thus limiting the reciprocal movement of the bushes only inside the slotted hole.

In alternative embodiments, a second spring is present inside said anchoring system, being placed between two supports, in which the first support is connected to the actuator and the second support is connected to the piston.

In particular, the actuator is managed by means of a PLC which sends some parameters to the actuator, including movement speed, heights to be reached, thrust forces, and waiting times.

A touch operator panel may be provided to send some parameters to the PLC, such as: water temperature, coffee dosage, coffee density, and pre-brewing time, in order to customize the beverage obtained.

In embodiments, an interface module is provided on the machine, which receives commands from a user's external terminal, and sends them to the PLC module. The terminal and the interface communicate wirelessly, in particular, the two modules may communicate with each other by means of Wi-Fi modules or Bluetooth modules.

### Brief description of the drawings

Further features and advantages of the invention will become apparent from reading the following description provided by way of non-limiting example, with the aid of the figures shown in the accompanying drawings, in which:
Figures 1-7 show examples of machines of the prior art;

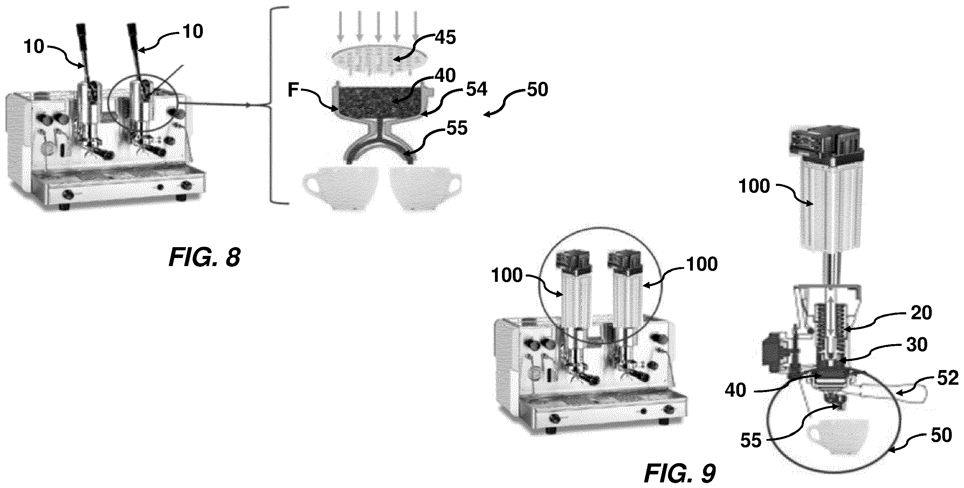

Figures 8-17 show examples of an espresso machine according to the present invention;
Figure 18 shows a block diagram of an espresso machine according to the present invention;
Figures 19-23 show examples of retrofit kits for espresso machines.

The component parts of the system according to the present description have been represented in the drawings, where appropriate, with conventional symbols, only showing those specific details which are pertinent to the understanding of the embodiments of the present invention, so as not to highlight details which will be immediately apparent those skilled in the art, with reference to the description reported herein.

### Detailed description of the invention

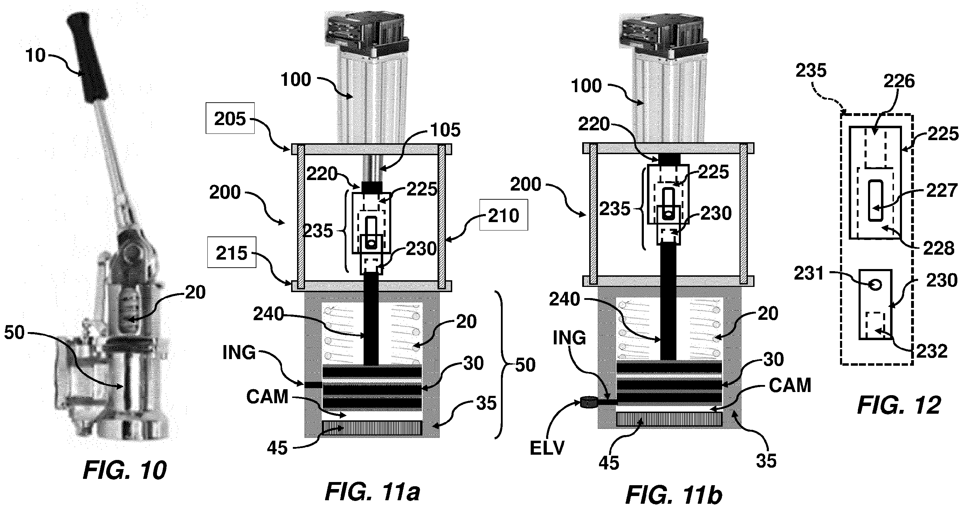

The solution suggested herein refers to an espresso machine which uses an electric actuator 100 for the extraction of the coffee (see Figure 11).

In particular, the piston 30 which pushes the water through the coffee powder layer 40 is managed by a linear electric actuator 100. The electric actuator 100 does not act directly on the piston 30, but an anchoring structure 200 is present which transmits the movement.

A linear electric actuator is an electromechanical device which converts a rotary motion of a motor into a linear movement, thus allowing to push, pull, lift, adjust or tilt heavy loads, allowing to manage movements and forces with high precision. By using the electric actuator 100 for the extraction of the espresso, it is possible to replicate, with the same machine, the extraction obtained with both the classic pump machine and the lever machine.

The electric actuator 100, being managed by a programmable logic controller PLC 110, may perform any movement, ensuring perfect control of position (dosage), speed and force (pressure).

The new coffee machine with actuator 100 is equipped with:
- a small touch operator panel 120 (connected to the PLC 110), useful for giving the command for starting the work cycle of the actuator 100 and for modifying the machine parameters described below: boiler water temperature, pre-brewing time, piston loading height 30 (dosage), spring loading speed 20, release speed and additional thrust pressure in case of using the system with a second spring 22 (Step 2a);
- the PLC 110 is connected to the actuator 100 which, upon receiving the cycle start input from the touch operator panel 120, manages the movements to the actuator 100 in accordance with the set parameters.

It should be emphasized that the spring indicated by reference 20 may be a single spring or be made from a spring unit. Therefore, in the description, reference is made, in some parts, to a spring 20, but this means the single spring or the spring resulting from the set of springs which compose it.

The actuator 100 is mounted on the dispensing unit 50 of the lever coffee machine M to replace the lever system 10 with the aim of loading the spring 20 which will then push the piston 30 which allows the water to permeate the ground coffee 40. The actuator 100 is not directly connected to the piston 30 and therefore, unlike in the previous solutions, the machine according to the present invention does not push the piston 30 directly. In particular, the thrust of the piston 30 to obtain the infusion will continue to be managed by the spring 20 or, in addition, by a second spring 22 assisted by the thrust of the electric actuator.

The solution suggested herein manages the steps of loading, waiting, and releasing with height control and added pressure.

The use of the PLC 110 provides the possibility for the operator to create specific extraction profiles and, by means of a tablet, smartphone or another mobile device, the customer may be allowed to select the type of extraction desired (short, long, normal, etc.).

With reference to Figure 10, the detail of the lever espresso machine is shown. Figure 11a shows an embodiment of the solution described herein. In particular, instead of lever 10, an actuator 100 is there, which acts indirectly on the spring or springs 20 and on the piston 30 inside a cylinder 35. Figure 11b shows a variant of the embodiment in Figure 11a. Figure 12 shows the bushes for the transmission of the movement from the actuator 100 to the piston 30.

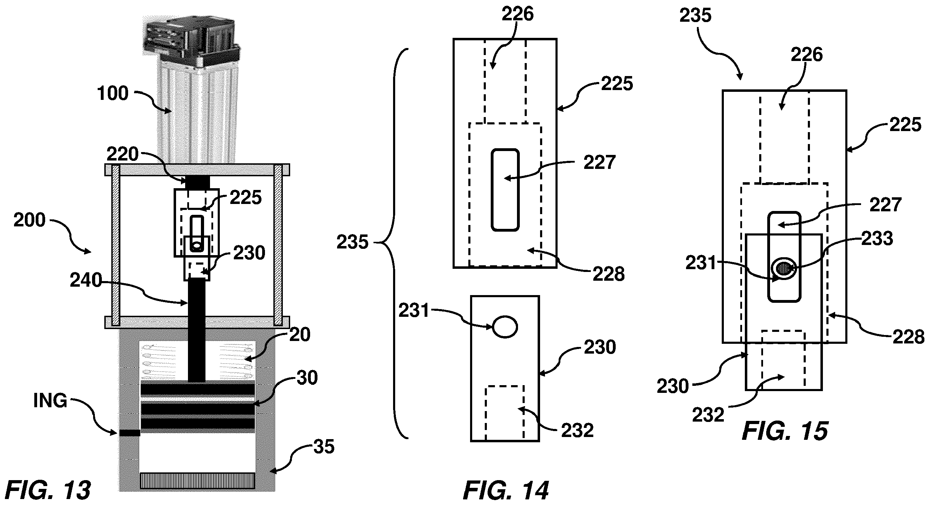

Figure 13 shows the details of the solution described herein. In particular, the actuator 100 is connected to the cylinder 35 by means of an anchoring system 200. The anchoring system 200 connects the actuator 100 and the extraction chamber CAM of the extraction unit 50 to each other. The anchoring system 200 comprises a first upper wall 205 connected to the actuator 100, side walls 210 and a bottom wall 215 in communication with the extraction unit 50.

A tubular anchoring element 220 is arranged between the end portion 105 of the actuator 100 and an upper bush 225. The upper bush 225 is connected to a lower bush 230 by means of a joint 235. The lower bush 230 is connected, by means of a tubular anchoring element 240, to the piston 30.

In particular, the spring 20 travels in the gap between the bottom wall 215 and the piston 30. When the piston 30 is preloaded and lifted towards the bottom wall 215, the spring 20 (piston thrust spring) is compressed. When the piston is released, the spring or springs 20 tend to return to the rest position and push the piston 30 downwards, i.e., towards the filter holder 54 containing the portion of ground coffee 40.

With reference to Figure 11a, a side wall of the cylinder 35 has an opening ING for the water from the boiler to enter. When the piston 30 is at rest, the opening ING is closed, and the water does not pass.

In an alternative embodiment, with reference to Figure 11b, a side wall of the cylinder 35 has an opening for the water from the boiler to enter which is controlled by a solenoid valve ELV.

With reference to Figures 14 and 15, the two bushes 225 and 230 are shown in the unassembled condition and in the assembled condition.

In particular, the upper bush comprises a portion 226 for anchoring the electric actuator 100. Furthermore, the upper bush 225 comprises, in the lower part thereof, a slotted hole 227, and an inner cavity 228 for the sliding of the lower bush 230. In particular, the inner cavity 228 of the upper bush 225 internally receives the upper portion of the lower bush 230.

The lower bush 230 comprises, in the upper portion thereof, a hole 231 and, in the lower portion thereof, a portion 232 for anchoring the piston 30.

In the description, the terms "upper" and "lower" are used with reference to the orientation of the elements shown in the Figures.

In the condition in which the two bushes are assembled, a pin 233 (or pintle) is provided, which allows the sliding of the two bushes one into the cavity of the other, thus limiting and constraining the reciprocal movement to the sliding allowed by the slotted hole 227.

In particular, the electric actuator 100 is connected to the first tubular anchoring element 220, which, in turn, is connected to the upper bush 225 by means of the anchoring portion 226.

The upper bush 225 is connected in an articulated manner to the lower bush 230. In particular, the upper bush 225 has, in the lower portion thereof, the slotted hole 227 in which the pin 233, which connects the upper bush 225 to the lower bush 230, slides. The two bushes may slide vertically with respect to each other. In more detail, the upper bush 225 may slide downwards, while the lower bush 230 remains stationary. In particular, the upper bush 225, during the downward movement, receives in the inner cavity 228 thereof the upper portion of the lower bush 230.

In particular, the pin 233, received in the hole 231 obtained in the upper portion of the lower bush 230, allows the mutual sliding of the two bushes. Therefore, the upper bushing 225 may slide downwards and bring the pin 233 from the lower end of the slotted hole 227 to the upper end of the slotted hole 227. Once the allowed translation movement ends, the upper bush 225 will push the lower bush 230 downwards during the downward movement operated by the actuator 100. In particular, when the pin 233, and therefore also the hole 231, reaches the final condition and the mutual sliding ends, the upper portion of the lower bush 230 abuts against the back wall of the inner cavity 228.

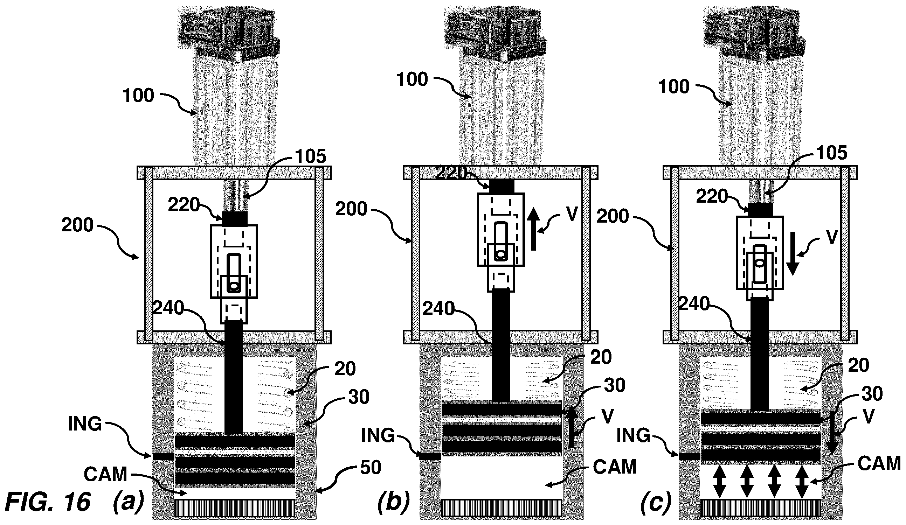

Figure 16 shows three subsequent steps of the use of the machine M.

In Step 0, shown in Figure 16 (a) the system is at rest, the spring 20 is almost completely discharged (i.e., it is in the rest position, not compressed), the piston 30 is completely lowered, i.e., in the condition near the filter holder 54, the water compression chamber CAM is empty and the opening ING for the water from the boiler to enter is obstructed by the piston 30 (or the hole for the water to enter may be in another point of the chamber, not obstructed by the piston, but closed by a solenoid valve ELV as shown in Figure 11b).

In Step 1, shown in Figure 16 (b), the actuator 100 pulls the piston 30, lifting it, and loading the spring 20; at this point the hot water will enter the chamber CAM filling it; in this step, the substantial height of the piston may be adjusted and this will allow to adjust the quantity of water to be used for the subsequent extraction of the coffee. In Step 2, shown in Figure 16 (c), upon the end of Step 1, the actuator 100 will wait for the pre-brewing time and then will start to descend with a speed such that, at some point, due to the pressure which is created in the compression chamber, the speed of the piston 30 will be lower than that of the actuator 100, the upper bush 225 will move to the set end-of-stroke position. Since the two bushes 225 and 230 are not constrained by the presence of the slotted hole 227, the piston 30 will continue to descend by means of the thrust of the spring 20 as it occurs with the classic lever machine, creating an extraction profile identical to the classic one; the travel of the actuator 100 downwards will not compromise or modify the extraction of the coffee.

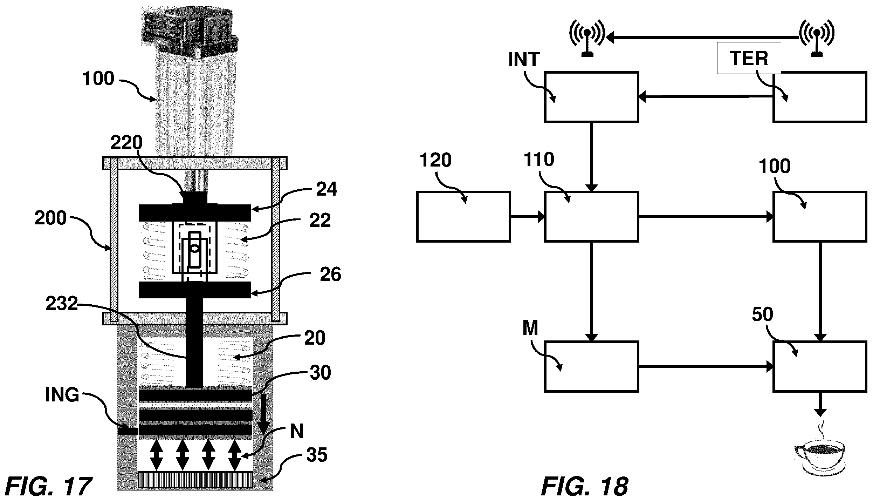

In alternative embodiments, see Figure 17, instead of Step 2, a Step 2a will be provided fully replacing Step 2.

In this case, a second spring 22 is there, between two supports 24 and 26 within the anchoring system 200. In particular, the support 24 is rigidly connected to the actuator 100, and the support 26 is rigidly connected to the piston 30.

The spring 22 is useful for transmitting the thrust controlled by the actuator 100 directly to the piston 30. Such thrust adds to the thrust of the spring 20.

Upon ending Step 1, the actuator 100 will wait for the pre-brewing time and then begin to descend, controlling, this time, the thrust force (N) and not the speed. Such condition will last until the set height is reached, thus allowing to influence the type of coffee extraction, since it changes the pressure of the water which permeates the ground coffee. Thereby, the thrust force of the actuator 100, by means of the spring 22, is added to the thrust force of the spring 20.

By applying such system, it may be further possible to create an APP and allow the most demanding customer to decide some parameters such as coffee quantity (short, medium, long), coffee density (strong, light) and pre-brewing time.

The actuator 100 is managed by means of a PLC 110 and is used to replace the loading lever 10 for the springs which push the piston 30. The infusion will still be obtained by the pressure exerted by the spring, this, so as not to compromise/modify the classic extraction profile which is obtained with this type of machine.

With reference to Figure 18, the espresso machine M receives from the PLC 110 the water temperature parameters and the commands for any solenoid valves.

A touch operator panel 120 allows to send some parameters to the PLC 110, such as:
- water temperature (fixed parameter),
- coffee dosage (modifiable at each cycle start),
- coffee density (modifiable at each cycle start),
- pre-brewing time (modifiable at each cycle start).

An interface module INT, which receives commands from an outer terminal TER, such as, for example, a smartphone, a PC, or a tablet, may be provided on the machine M. The user may send commands to the PLC module 110 by means of the terminal TER and by means of the interface INT. Such commands may comprise parameters such as coffee dosage, coffee density, and pre-brewing time, so as to obtain the drink according to the preferences of the user. The terminal TER and the interface INT may, for example, communicate by means of Wi-Fi modules or another connection with mobile devices.

The PLC module 110 sends some parameters to the actuator 100 including speed of movements, heights to be reached, thrust forces, and waiting times.

Finally, the machine M sends the quantity of water required, at the controlled and desired temperature, to the dispensing unit 50.

With this system it will be further possible to manage the pre-brewing time (time between spring loading and release) and the piston travel (control of the coffee dosage in the cup).

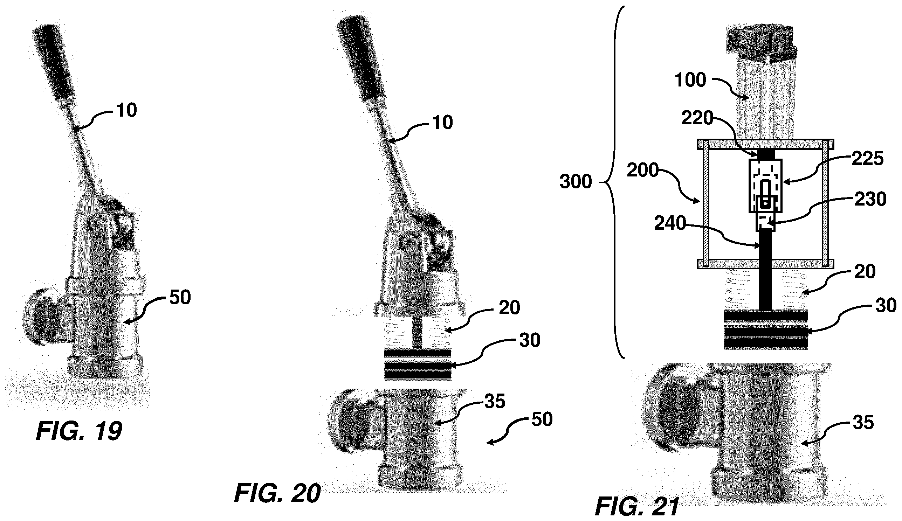

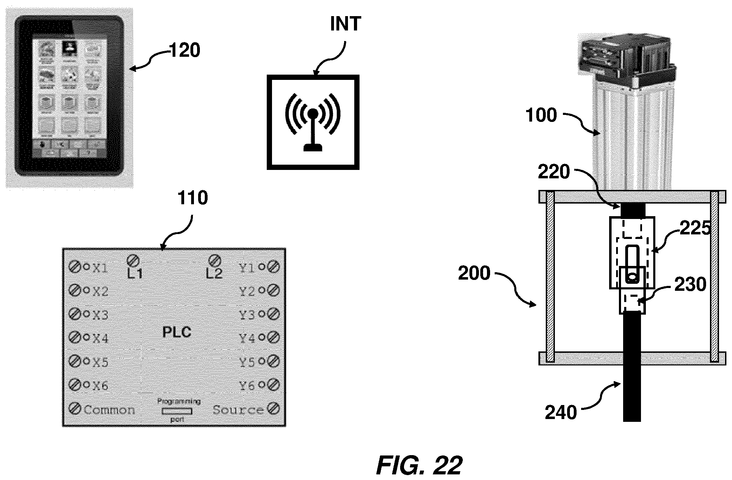

With reference to Figures 19-22, a retrofit kit for existing espresso machines is now also described. Thereby, it is possible to modify current manual lever espresso machines, by automating them with an electric actuator.

In particular, Figure 19 shows the extractor unit of a lever espresso machine which is to be replaced with the new automatic extractor unit which uses an electric actuator. Figure 20 shows the same extractor unit in the exploded condition, in which the elements contained in the cylinder 35 are shown. In particular, the extractor unit to be removed from the machine comprises the lever 10, the spring or springs 20, the piston 30 and cylinder 35.

Figure 21 shows the retrofit kit 300 to be applied to the machine to automate it. The retrofit kit 300 comprises the electric actuator 100 and the anchoring system 200. In particular, the anchoring system 200 comprises a first tubular element 220 for the anchoring to the actuator 100 and a tubular element 240 for the anchoring to the piston 30.

In particular, the electric actuator 100 is connected to the first tubular anchoring element 220, which, in turn, is connected to the upper bush 225. The upper bush 225 is connected in an articulated manner to the lower bush 230. In particular, the upper bush 225 has, in the lower portion thereof, the slotted hole 227 in which a pin 233, which connects the upper bush 225 to the lower bush 230, slides. In particular, the pin 233 is received in the hole 231 obtained in the upper portion of the lower bush 230. Therefore, the upper bushing 225 may slide downwards and bring the pin 233 from the lower end of the slotted hole 227 to the upper end of the slotted hole 227. Once the allowed translation movement ends, the upper bush 225 will push the lower bush 230 downwards during the downward movement operated by the actuator 100.

The advantages of the piston machine operated by an electric actuator comprise:
- a 30% (or even greater) increase in coffee production compared to the manual lever machine;
- style and allure of the piston machine with the addition of technology;
- a coffee less bitter in the cup due to the characteristic extraction profile;
- full-density coffee due to the characteristic extraction profile;
- it does not require energetic manual skills of the operator;
- the operator is no longer forced to follow the extraction process;
- by virtue of the automation applied, very expert operators are not required for a good extraction;
- constant flavor;
- the dosage in the cup may be automatically adjusted;
- the pre-brewing time may be set automatically.

Of course, without prejudice to the principle of the invention, the construction details and the embodiments may widely vary with respect to the above disclosure given by way of mere example, without departing from the scope of the present invention.

## Claims

1. An espresso machine (M) comprising:
- an extraction unit (50) adapted to extract the beverage from a portion of ground coffee (40) contained in a filter holder (54),
- an infusion cylinder (35) where one or more springs (20) and a piston (30) are housed, wherein said piston (30) acts on said portion of ground coffee (40) contained in said filter holder (54),
- a boiler (60) containing water for making coffee,
wherein said machine further comprises an actuator (100) mounted onto the dispensing unit (50) of the coffee machine (M) by means of an anchoring system (200), wherein said actuator (100) indirectly acts on said piston (30) by means of said anchoring system (200) which is adapted to transmit the movement of the actuator (100) to load the spring (20) and push the piston (30) which allows the water from the boiler (60) to permeate the ground coffee (40) and obtain the beverage, **characterised in that** said anchoring system (200) comprises an upper wall (205) connected to the actuator (100), side walls (210) which surround a movement transmission unit (225,230), and a bottom wall (215) in communication with the extraction unit (50), wherein a first tubular anchoring element (220) is arranged between an end portion (105) of the actuator (100) and said movement transmission unit (225,230), wherein said movement transmission unit (225,230) is connected, in turn, to the piston (30) by means of a second tubular anchoring element (240), wherein said movement transmission unit (225,230) comprises an upper bush (225) connected to a lower bush (230) by means of a joint (235), and wherein said upper bush (225) is connected to said actuator (100) by means of said first tubular anchoring element (220), and said lower bush (230) is connected to the piston (30) by means of said second tubular anchoring element (240), and wherein the upper bush (225) comprises a portion (226) for anchoring the electric actuator (100), a slotted hole (227) and an inner hole (228) for the sliding of the lower bush (230), and wherein the lower bush (230) comprises a hole (231) and a portion (232) for anchoring the piston (30).

2. The espresso machine (M) according to claim 1, wherein the spring (20) travels in the gap between the bottom wall (215) of said anchoring system (200) and the piston (30).

3. The espresso machine (M) according to claim 2, wherein, when the piston (30) is preloaded and lifted towards the bottom wall (215) of said anchoring system (200), the spring (20) is compressed, and when the piston (30) is released, the spring (20) tends to return to its rest position and pushes the piston (30) towards said filter holder (54) containing said portion of ground coffee (40).

4. The espresso machine (M) according to claim 3, wherein a side wall of the cylinder (35) has an opening (ING) for the water from the boiler (60) to enter, wherein said opening (ING) is closed by the piston (30) in the rest condition of the piston (30) or by a solenoid valve (ELV).

5. The espresso machine (M) according to claim 1, wherein in the assembled condition of the two bushes (225,230), a pin (233) is provided, being inserted into the slotted hole (227), which allows the sliding of the two bushes (225,230) into each other, thus limiting the reciprocal movement of the bushes only inside the slotted hole (227).

6. The espresso machine (M) according to claim 5, wherein a second spring (22) is present inside said anchoring system (200), being placed between two supports (24,26), wherein the first support (24) is connected to the actuator (100) and the second support (26) is connected to the piston (30).

7. The espresso machine (M) according to any of the preceding claims, wherein the actuator (100) is managed by means of a PLC (110) which sends some parameters to the actuator (100), including movement speed, heights to be reached, thrust forces, and waiting times.

8. The espresso machine (M) according to any of the preceding claims, wherein a touch operator panel (120) is present for sending some parameters to the PLC (110), such as: water temperature, coffee dosage, coffee density, and pre-brewing time, in order to customize the beverage obtained.

9. The espresso machine (M) according to claim 7 or claim 8, wherein an interface module (INT) is provided on the machine (M), which receives commands from a user's external terminal (TER), wherein said commands are sent to the PLC module (110).

10. The espresso machine (M) according to claim 9, wherein the user terminal (TER) and the interface (INT) wirelessly communicate with fixed or mobile devices, in particular by means of Wi-Fi modules.

11. A retrofit kit for an espresso machine (M) comprising an actuator (100) and an anchoring system (200), the actuator (100) being mountable by means of the anchoring system (200) onto the dispensing unit (50) of the coffee machine (M), wherein said anchoring system (200) is adapted to indirectly transmit the movement of the actuator (100) to the dispensing unit (50), wherein said anchoring system (200) comprises an upper wall (205) connected to the actuator (100), side walls (210) which surround a movement transmission unit (225,230), and a bottom wall (215) in communication with the extraction unit (50), wherein a first tubular anchoring element (220) is arranged between an end portion (105) of the actuator (100), and wherein said movement transmission unit (225,230) is connected, in turn, to the piston (30) by means of a second tubular anchoring element (240), wherein said movement transmission unit (225,230) comprises an upper bush (225) connected to a lower bush (230) by means of a joint (235), and wherein said upper bush (225) is connected to said actuator (100) by means of said first tubular anchoring element (220), and said lower bush (230) is connected to the piston (30) by means of said second tubular anchoring element (240), and wherein the upper bush (225) comprises a portion (226) for anchoring the electric actuator (100), a slotted hole (227), and an inner cavity (228) for the sliding of the lower bush (230), and wherein the lower bush (230) comprises a hole (231) and a portion (232) for anchoring the piston (30)..

12. The retrofit kit for an espresso machine (M) according to claim 11, wherein a spring (20) travels in the gap between the bottom wall (215) of said anchoring system (200) and the piston (30).

13. The retrofit kit for an espresso machine (M) according to claim 12, wherein, when the piston (30) is preloaded and lifted towards the bottom wall (215) of said anchoring system (200), the spring (20) is compressed, and when the piston (30) is released, the spring (20) tends to return to its rest position and pushes the piston (30) towards a filter holder (54) containing a portion of ground coffee (40).

14. The retrofit kit for an espresso machine (M) according to claim 11, wherein in the assembled condition of the two bushes (225,230), a pin (233) is provided, being inserted into the slotted hole (227), which allows the sliding of the two bushes (225,230) into each other, thus limiting the reciprocal movement of the bushes only inside the slotted hole (227).

15. The retrofit kit for an espresso machine (M) according to claim 13, wherein a second spring (22) is present inside said anchoring system (200), being placed between two supports (24,26), wherein the first support (24) is connected to the actuator (100) and the second support (26) is connected to the piston (30).

## Patentansprüche

1. Espressomaschine (M), umfassend:
- eine Extraktionseinheit (50), die geeignet ist, das Getränk aus einem in einem Filterhalter (54) enthaltenen Abschnitt des gemahlenen Kaffees (40) zu extrahieren,
- einen Aufgusszylinder (35), in dem eine oder mehrere Federn (20) und ein Kolben (30) untergebracht sind, wobei der Kolben (30) auf die in dem Filterhalter (54) enthaltene Abschnitt des gemahlenen Kaffees (40) einwirkt,
- einen Kessel (60), der Wasser für die Kaffeezubereitung enthält,
wobei die Maschine ferner ein Betätigungselement (100) umfasst, das mittels eines Verankerungssystems (200) an der Ausgabeeinheit (50) der Kaffeemaschine (M) angebracht ist, wobei das Betätigungselement (100) indirekt auf den Kolben (30) mittels des Verankerungssystems (200) einwirkt, das so beschaffen ist, dass es die Bewegung des Betätigungselements (100) überträgt, um die Feder (20) zu belasten und den Kolben (30) zu schieben, was es dem Wasser aus dem Boiler (60) ermöglicht, in das Kaffeemehl (40) einzudringen und das Getränk zu erhalten, **dadurch gekennzeichnet, dass** das Verankerungssystem (200) eine obere Wand (205), die mit dem Betätigungselement (100) verbunden ist, Seitenwände (210), die eine Bewegungsübertragungseinheit (225,230) umgeben, und eine untere Wand (215) in Verbindung mit der Extraktionseinheit (50) umfasst, wobei ein erstes rohrförmiges Verankerungselement (220) zwischen einem Endabschnitt (105) des Betätigungselements (100) und der Bewegungsübertragungseinheit (225,230) angeordnet ist, wobei die Bewegungsübertragungseinheit (225,230) ihrerseits mit dem Kolben (30) mittels eines zweiten rohrförmigen Verankerungselements (240) verbunden ist, wobei die Bewegungsübertragungseinheit (225,230) eine obere Buchse (225) umfasst, die mit einer unteren Buchse (230) mittels eines Gelenks (235) verbunden ist, und wobei die obere Buchse (225) mit dem Stellglied (100) mittels des ersten rohrförmigen Verankerungselements (220) verbunden ist, und die untere Buchse (230) mit dem Kolben (30) mittels des zweiten rohrförmigen Verankerungselements (240) verbunden ist, und wobei die obere Buchse (225) einen Abschnitt (226) zum Verankern des elektrischen Stellglieds (100), ein Langloch (227) und ein inneres Loch (228) für das Gleiten der unteren Buchse (230) umfasst, und wobei die untere Buchse (230) ein Loch (231) und einen Abschnitt (232) zum Verankern des Kolbens (30) umfasst.

2. Espressomaschine (M) nach Anspruch 1, wobei sich die Feder (20) in dem Spalt zwischen der Bodenwand (215) des Verankerungssystems (200) und dem Kolben (30) bewegt.

3. Espressomaschine (M) nach Anspruch 2, wobei die Feder (20) zusammengedrückt wird, wenn der Kolben (30) vorgespannt und in Richtung der Bodenwand (215) des Verankerungssystems (200) angehoben wird und die Feder (20) dazu neigt, in ihre Ruheposition zurückzukehren, wenn der Kolben (30) losgelassen wird, und den Kolben (30) in Richtung des Filterhalters (54) drückt, der den Abschnitt des gemahlenen Kaffees (40) enthält.

4. Espressomaschine (M) nach Anspruch 3, wobei eine Seitenwand des Zylinders (35) eine Öffnung (ING) für den Eintritt des Wassers aus dem Boiler (60) aufweist, wobei die Öffnung (ING) durch den Kolben (30) im Ruhezustand des Kolbens (30) oder durch ein Magnetventil (ELV) verschlossen ist.

5. Espressomaschine (M) nach Anspruch 1, wobei im zusammengebauten Zustand der beiden Buchsen (225,230) ein Stift (233) vorgesehen ist, der in das Langloch (227) eingesetzt ist und das Ineinanderschieben der beiden Buchsen (225,230) ermöglicht, wodurch die Hin- und Herbewegung der Buchsen nur innerhalb des Langlochs (227) begrenzt wird.

6. Espressomaschine (M) nach Anspruch 5, wobei eine zweite Feder (22) innerhalb des Verankerungssystems (200) vorhanden ist, die zwischen zwei Trägern (24,26) angeordnet ist, wobei der erste Träger (24) mit dem Aktuator (100) verbunden ist und der zweite Träger (26) mit dem Kolben (30) verbunden ist.

7. Espressomaschine (M) nach einem der vorhergehenden Ansprüche, wobei der Aktuator (100) mittels einer SPS (110) gesteuert wird, die einige Parameter an den Aktuator (100) sendet, einschließlich Bewegungsgeschwindigkeit, zu erreichende Höhen, Schubkräfte und Wartezeiten.

8. Espressomaschine (M) nach einem der vorhergehenden Ansprüche, wobei ein Touch-Bedienfeld (120) vorhanden ist, um einige Parameter an die SPS (110) zu senden, wie z.B.: Wassertemperatur, Kaffeedosierung, Kaffeedichte und Vorbrühzeit, um das erhaltene Getränk anzupassen.

9. Espressomaschine (M) nach Anspruch 7 oder Anspruch 8, wobei ein Schnittstellenmodul (INT) an der Maschine (M) vorgesehen ist, das Befehle von einem externen Terminal (TER) eines Benutzers empfängt, wobei die Befehle an das SPS-Modul (110) gesendet werden.

10. Espressomaschine (M) nach Anspruch 9, wobei das Benutzerterminal (TER) und die Schnittstelle (INT) drahtlos mit festen oder mobilen Geräten kommunizieren, insbesondere mittels Wi-Fi-Module.

11. Nachrüstsatz für eine Espressomaschine (M) umfassend ein Betätigungselement (100) und ein Verankerungssystem (200), wobei das Betätigungselement (100) mittels des Verankerungssystems (200) an der Ausgabeeinheit (50) der Kaffeemaschine (M) montierbar ist, wobei das Verankerungssystem (200) geeignet ist, die Bewegung des Betätigungselements (100) indirekt auf die Ausgabeeinheit (50) zu übertragen, wobei das Verankerungssystem (200) eine obere Wand (205), die mit dem Betätigungselement (100) verbunden ist, Seitenwände (210), die eine Bewegungsübertragungseinheit (225,230) umgeben, und eine untere Wand (215), die mit der Extraktionseinheit (50) in Verbindung steht, umfasst, wobei ein erstes rohrförmiges Verankerungselement (220) zwischen einem Endabschnitt (105) des Betätigungselements (100) angeordnet ist, und wobei die Bewegungsübertragungseinheit (225,230) wiederum mittels eines zweiten rohrförmigen Verankerungselements (240) mit dem Kolben (30) verbunden ist, wobei die Bewegungsübertragungseinheit (225,230) eine obere Buchse (225) umfasst, die mittels eines Gelenks (235) mit einer unteren Buchse (230) verbunden ist, und wobei die obere Buchse (225) mittels des ersten rohrförmigen Verankerungselements (220) mit dem Stellglied (100) verbunden ist, und die untere Buchse (230) mit dem Kolben (30) mittels des zweiten rohrförmigen Verankerungselements (240) verbunden ist, und wobei die obere Buchse (225) einen Abschnitt (226) zum Verankern des elektrischen Stellglieds (100), ein Langloch (227) und einen inneren Hohlraum (228) für das Gleiten der unteren Buchse (230) umfasst, und wobei die untere Buchse (230) ein Loch (231) und einen Abschnitt (232) zum Verankern des Kolbens (30) umfasst.

12. Nachrüstsatz für eine Espressomaschine (M) nach Anspruch 11, wobei sich eine Feder (20) in dem Spalt zwischen der Bodenwand (215) des Verankerungssystems (200) und dem Kolben (30) bewegt.

13. Nachrüstsatz für eine Espressomaschine (M) nach Anspruch 12, wobei die Feder (20) zusammengedrückt wird, wenn der Kolben (30) vorgespannt und in Richtung der Bodenwand (215) des Verankerungssystems (200) angehoben wird, und die Feder (20) dazu neigt, in ihre Ruheposition zurückzukehren, wenn der Kolben (30) losgelassen wird, und den Kolben (30) in Richtung eines Filterhalters (54) drückt, der einen Abschnitt des gemahlenen Kaffees (40) enthält.

14. Nachrüstsatz für eine Espressomaschine (M) nach Anspruch 11, wobei im zusammengebauten Zustand der beiden Buchsen (225,230) ein Stift (233) vorgesehen ist, der in das Langloch (227) eingesetzt ist und das Ineinanderschieben der beiden Buchsen (225,230) ermöglicht, wodurch die Hin- und Herbewegung der Buchsen nur innerhalb des Langlochs (227) begrenzt wird.

15. Nachrüstsatz für eine Espressomaschine (M) nach Anspruch 13, wobei eine zweite Feder (22) im Inneren des Verankerungssystems (200) vorhanden ist, die zwischen zwei Trägern (24,26) angeordnet ist, wobei der erste Träger (24) mit dem Aktuator (100) verbunden ist und der zweite Träger (26) mit dem Kolben (30) verbunden ist.

## Revendications

1. Une machine à expresso (M) comprenant :
- une unité d'extraction (50) adaptée pour extraire la boisson d'une portion de café moulu (40) contenue dans un porte-filtre (54) ;
- un cylindre d'infusion (35) où sont logés un ou plusieurs ressorts (20) et un piston (30), dans lequel ledit piston (30) agit sur ladite portion de café moulu (40) contenue dans ledit porte-filtre (54) ;
- une chaudière (60) contenant de l'eau de préparation du café ;
dans laquelle ladite machine comprend en outre un actionneur (100) monté sur l'unité de distribution (50) de la machine à café (M) au moyen d'un système d'ancrage (200) ; dans laquelle ledit actionneur (100) agit indirectement sur ledit piston (30) au moyen dudit système d'ancrage (200) qui est adapté pour transmettre le mouvement de l'actionneur (100) pour charger le ressort (20) et pousser le piston (30) qui permet à l'eau de la chaudière (60) de pénétrer dans le café moulu (40) et d'obtenir la boisson, **caractérisée en ce que** ledit système d'ancrage (200) comprend une paroi supérieure (205) reliée à l'actionneur (100), des parois latérales (210) qui entourent une unité de transmission de mouvement (225, 230) et une paroi inférieure (215) en communication avec l'unité d'extraction (50) ; dans laquelle un premier élément d'ancrage tubulaire (220) est disposé entre une extrémité (105) de l'actionneur (100) et ladite unité de transmission de mouvement (225, 230) ; dans laquelle ladite unité de transmission de mouvement (225, 230) est reliée, à son tour, au piston (30) au moyen d'un second élément d'ancrage tubulaire (240) ; dans laquelle ladite unité de transmission de mouvement (225, 230) comprend une douille supérieure (225) reliée à une douille inférieure (230) au moyen d'un joint (235) ; dans laquelle ladite douille supérieure (225) est reliée au dit actionneur (100) au moyen dudit premier élément d'ancrage tubulaire (220) et ladite douille inférieure (230) est reliée au piston (30) au moyen dudit second élément d'ancrage tubulaire (240) ; dans laquelle la douille supérieure (225) comprend une partie (226) pour l'ancrage de l'actionneur électrique (100), un orifice en forme de fente (227) et un orifice interne (228) pour le coulissement de la douille inférieure (230) ; et dans laquelle la douille inférieure (230) comprend un orifice (231) et une partie (232) pour l'ancrage du piston (30).

2. Machine à expresso (M) selon la revendication 1, dans laquelle le ressort (20) se déplace dans l'espace entre la paroi inférieure (215) dudit système d'ancrage (200) et le piston (30).

3. Machine à expresso (M) selon la revendication 2, dans laquelle, lorsque le piston (30) est préchargé et soulevé vers la paroi inférieure (215) dudit système d'ancrage (200), le ressort (20) est comprimé, et lorsque le piston (30) est relâché, le ressort (20) tend à revenir à sa position de repos et pousse le piston (30) vers ledit porte-filtre (54) contenant ladite portion de café moulu (40).

4. Machine à expresso (M) selon la revendication 3, dans laquelle une paroi latérale du cylindre (35) présente une ouverture (ING) pour l'entrée de l'eau provenant de la chaudière (60) ; dans laquelle ladite ouverture (ING) est fermée par le piston (30) dans l'état de repos du piston (30) ou par une électrovanne (ELV).

5. Machine à expresso (M) selon la revendication 1, dans laquelle, à l'état d'assemblage des deux douilles (225, 230), une broche (233) est prévue, insérée dans l'orifice en forme de fente (227), qui permet le glissement des deux douilles (225, 230) l'une dans l'autre, limitant ainsi le mouvement de va-et-vient des douilles uniquement à l'intérieur de l'orifice en forme de fente (227).

6. Machine à expresso (M) selon la revendication 5, dans laquelle un second ressort (22) est présent à l'intérieur dudit système d'ancrage (200), étant placé entre deux supports (24, 26) ; dans laquelle le premier support (24) est relié à l'actionneur (100) et le second support (26) est relié au piston (30).

7. Machine à expresso (M) selon l'une quelconque des revendications précédentes, dans laquelle l'actionneur (100) est géré au moyen d'un automate programmable (110) qui envoie certains paramètres à l'actionneur (100), notamment la vitesse de déplacement, les hauteurs à atteindre, les forces de poussée et les temps d'attente.

8. Machine à expresso (M) selon l'une quelconque des revendications précédentes, dans laquelle un panneau de commande tactile (120) est présent pour envoyer certains paramètres à l'automate programmable (110), tels que : la température de l'eau, le dosage du café, la densité du café et le temps de pré-infusion, afin de personnaliser la boisson obtenue.

9. Machine à expresso (M) selon la revendication 7 ou la revendication 8, dans laquelle un module d'interface (INT) est prévu sur la machine (M), qui reçoit des commandes d'un terminal externe (TER) d'un utilisateur, lesdites commandes sont envoyées à l'automate programmable (110).

10. Machine à expresso (M) selon la revendication 9, dans laquelle le terminal externe (TER) d'utilisateur et l'interface (INT) communiquent sans fil avec des dispositifs fixes ou mobiles, notamment au moyen de modules Wi-Fi.

11. Complément d'équipement pour une machine à expresso (M) comprenant un actionneur (100) et un système d'ancrage (200), l'actionneur (100) pouvant être monté au moyen du système d'ancrage (200) sur l'unité de distribution (50) de la machine à café (M), dans lequel ledit système d'ancrage (200) est adapté pour transmettre indirectement le mouvement de l'actionneur (100) à l'unité de distribution (50); dans lequel ledit système d'ancrage (200) comprend une paroi supérieure (205) reliée à l'actionneur (100), des parois latérales (210) qui entourent une unité de transmission de mouvement (225, 230), et une paroi inférieure (215) en communication avec l'unité d'extraction (50) ; dans lequel un premier élément d'ancrage tubulaire (220) est disposé entre une extrémité (105) de l'actionneur (100) ; et dans lequel ladite unité de transmission de mouvement (225, 230) est reliée, à son tour, au piston (30) au moyen d'un second élément d'ancrage tubulaire (240) ; dans lequel ladite unité de transmission de mouvement (225, 230) comprend une douille supérieure (225) reliée à une douille inférieure (230) au moyen d'un joint (235), et dans lequel ladite douille supérieure (225) est reliée au dit actionneur (100) au moyen dudit premier élément d'ancrage tubulaire (220), et ladite douille inférieure (230) est reliée au piston (30) au moyen dudit second élément d'ancrage tubulaire (240), et dans lequel la douille supérieure (225) comprend une partie (226) pour l'ancrage de l'actionneur électrique (100), un orifice en forme de fente (227), et une cavité interne (228) pour le coulissement de la douille inférieure (230), et dans lequel la douille inférieure (230) comprend un orifice (231) et une partie (232) pour l'ancrage du piston (30).

12. Complément d'équipement pour machine à expresso (M) selon la revendication 11, dans lequel le ressort (20) se déplace dans l'espace entre la paroi inférieure (215) dudit système d'ancrage (200) et le piston (30).

13. Complément d'équipement pour machine à expresso (M) selon la revendication 12, dans lequel, lorsque le piston (30) est préchargé et soulevé vers la paroi inférieure (215) dudit système d'ancrage (200), le ressort (20) est comprimé, et lorsque le piston (30) est relâché, le ressort (20) tend à revenir à sa position de repos et pousse le piston (30) vers un porte-filtre (54) contenant ladite portion de café moulu (40).

14. Complément d'équipement pour machine à expresso (M) selon la revendication 11, dans lequel, à l'état d'assemblage des deux douilles (225, 230), une broche (233) est prévue, insérée dans l'orifice en forme de fente (227), qui permet le glissement des deux douilles (225, 230) l'une dans l'autre, limitant ainsi le mouvement de va-et-vient des douilles uniquement à l'intérieur de l'orifice en forme de fente (227).

15. Complément d'équipement pour machine à expresso (M) selon la revendication 13, dans lequel un second ressort (22) est présent à l'intérieur dudit système d'ancrage (200), étant placé entre deux supports (24, 26) ; dans lequel le premier support (24) est relié à l'actionneur (100) et le second support (26) est relié au piston (30).
